# EUROPÄISCHE PATENTSCHRIFT

(11) **EP 1 525 166 B1**
(45) Veröffentlichungstag und Bekanntmachung des Hinweises auf die Patenterteilung: **20.01.2010**
(21) Anmeldenummer: 03732310.2
(22) Anmeldetag: 03.05.2003
(51) Int. Cl.: C03B 9/193

(54) **PRESSSTEMPELMECHANISMUS EINER GLASFORMMASCHINE**
PATRIX MECHANISM OF A GLASS-MOLDING MACHINE
MECANISME DE PISTON DE COMPRESSION POUR MACHINE DE MOULAGE DE VERRE

(30) Priorität: 31.07.2002 DE 20211783 U
(43) Veröffentlichungstag der Anmeldung: 27.04.2005
(73) Patentinhaber: Heye International GmbH, 31683 Obernkirchen (DE)
(72) Erfinder: BÖGERT, Hermann, 31749 Auetal (DE); KÄSSNER, Waldemar, 31749 Auetal (DE); MONDEN, Norbert, 31749 Auetal (DE)
(74) Vertreter: Sobisch, Peter
(86) Internationale Anmeldenummer: PCT/EP2003/004659
(87) Internationale Veröffentlichungsnummer: WO 2004/018371

(56) Entgegenhaltungen:
- DE-U- 9 212 648
- GB-A- 668 983
- US-A- 4 272 273
- US-A- 4 659 357
- US-A- 5 411 564

## Beschreibung

Die Erfindung betrifft einen Pressstempelmechanismus gemäß dem Oberbegriff des Anspruchs 1.

Bei einem bekannten Pressstempelmechanismus dieser Art (DE 30 40 762 C2 der Anmelderin) werden die Pressstempelhalter durch einen Kurbeltrieb (Spalte 6, Zeilen 22 und 23) angetrieben. Diese Bauweise ist aufwändig und beansprucht viel Raum in der Glasformmaschine.

Eine alternative Art des Antriebs der Pressstempelhalter ist aus der US 5,411,564 bekannt. Diese werden hiernach jeweils durch eine Kolbenzylindereinheit zwischen einer Press- und einer Ruhestellung axial hin und her gehend bewegt. Dieser Druckmittelantrieb wird von einem ersten Gehäuse getragen, das mittels eines weiteren, als Spindeltrieb ausgebildeten Antriebs gegenüber einem Maschinenrahmen parallel zur Längsrichtung der Pressstempel justierbar angeordnet ist. Letztgenannter Spindelantrieb wird durch mehrere, sich parallel zueinander erstreckende Gewindespindeln gebildet, die mit drehfest in einem Boden des genannten Gehäuses angeordneten Spindelmuttern im Eingriff stehen, die eingangsseitig über ein Getriebe zusammengefasst werden und mit einem Antrieb in Verbindung stehen. Eine genaue Bewegungssteuerung mit einem Druckmittelantrieb ist jedoch kaum oder nur mit einem großen Aufwand zu erreichen.

Der Erfindung liegt die Aufgabe zugrunde, den Linearantrieb der Pressstempel beim geringem Raumbedarf zu vereinfachen und präziser zu gestalten.

Diese Aufgabe ist durch die Merkmale des Anspruchs 1 gelöst. Als Druckfluid für die Beaufschlagung der Kolben kommt insbesondere Druckluft in Betracht. Dadurch kann der Pressstempel ständig in Richtung seiner Pressstellung vorgespannt werden. Für die Pressstellung des Pressstempels steht hierdurch ein elastisches Polster zu Verfügung, welches eine Presskraftbegrenzung bewirkt. Mit der Gewindespindel lässt sich jede beliebige axiale Stellung des Pressstempels sehr genau und schnell anfahren. Bei diesen Stellungen handelt es sich z.B. um die Ruhestellung, die Pressstellung und eine dazwischen liegende Ladestellung, die alle an sich bekannt sind. Durch das Winkelgetriebe kann die Bauhöhe des Pressstempelmechanismus wünschenswert verringert werden.

Der genannte zweite Antrieb dient der axialen Grundeinstellung der Pressstempel zur Anpassung an den jeweils durch die Glasformmaschine herzustellenden Glasbehälter.

Die Merkmale des Anspruchs 2 dienen der kontrollierten Bewegung des Pressstempels.

Gemäß Anspruch 3 erhält man einen sicheren Drehantrieb der Mutter bei geringer Bauhöhe.

Die Merkmale des Anspruchs 4 dienen der konstruktiven und baulichen Vereinfachung.

Gemäß Anspruch 5 kann auf einfache Weise ein unerwünschtes Öffnen der Kupplungsringe verhindert werden.

Durch die Merkmale des Anspruchs 6 lässt sich die axiale Stellung des Pressstempels sehr genau und mit einfachen Mitteln feststellen. Hierbei interessiert vor allem die maximale Eindringtiefe des Pressstempels in den Glastropfen in der Vorform. Daraus kann auf die Größe der Masse des Glastropfens geschlossen werden. Die Stellungssignale können zur Regelung der Tropfenmasse herangezogen werden.

Durch die Merkmale des Anspruchs 7 kann die Kolbenstange vor einer Drehung gesichert werden.

Die Merkmale des Anspruchs 8 dienen der baulichen Vereinfachung.

Die Ausbildung des zweiten Antriebs gemäß Anspruch 9 dient ebenfalls diesem Zweck.

Gleiches gilt für die Merkmale des Anspruchs 10.

Gemäß Anspruch 11 lässt sich die durch den zweiten Antrieb erzielte axiale Grundeinstellung der Pressstempel auf einfache und wirksame Art fixieren.

Die Merkmale des Anspruchs 12 sind konstruktiv besonders günstig.

Durch die Merkmale des Anspruchs 13 ergibt sich sowohl für die Traverse als auch für das erste Gehäuse eine sehr stabile und präzise Längsführung.

Gemäß Anspruch 14 ist eine sehr betriebssichere und baulich einfache Versorgung der Pressstempel mit Kühlluft und der Kolben und Zylinder der Pressstempelhalter mit Druckfluid gewährleistet. Diese strömfähigen Medien können auf jede beliebige Weise den Versorgungsrohren durch das Maschinenbett zugeführt werden. Die Weiterleitung dieser Medien vom Ende der Teleskoprohre geschieht jeweils durch ein Kanalsystem in geeigneter Weise.

Gemäß Anspruch 15 sind die Versorgungs- und Teleskoprohre in besonderer Weise vor mechanischer Beschädigung und vor gegenseitiger Verkantung geschützt.

Diese und weitere Merkmale und Vorteile der Erfindung werden nachfolgend anhand des in den Zeichnungen dargestellten Ausführungsbeispiels näher erläutert. Es zeigt
Fig. 1 einen Längsschnitt durch einen Pressstempelmechanismus gemäß Linie I-I in Fig. 2,
Fig. 2 die Schnittansicht nach Linie II-II in Fig. 1,
Fig. 3 die Schnittansicht nach Linie III-III in Fig. 2 in vergrößerter Darstellung,
Fig. 4 den oberen Bereich der Fig. 1 in vergrößerter Darstellung,
Fig. 5 im Wesentlichen die Ansicht gemäß Linie V-V in Fig. 4,
Fig. 6 die Schnittansicht nach Linie VI-VI in Fig. 5 und
Fig. 7 die Schnittansicht nach Linie VII-VII in Fig. 2 in vergrößerter Darstellung.

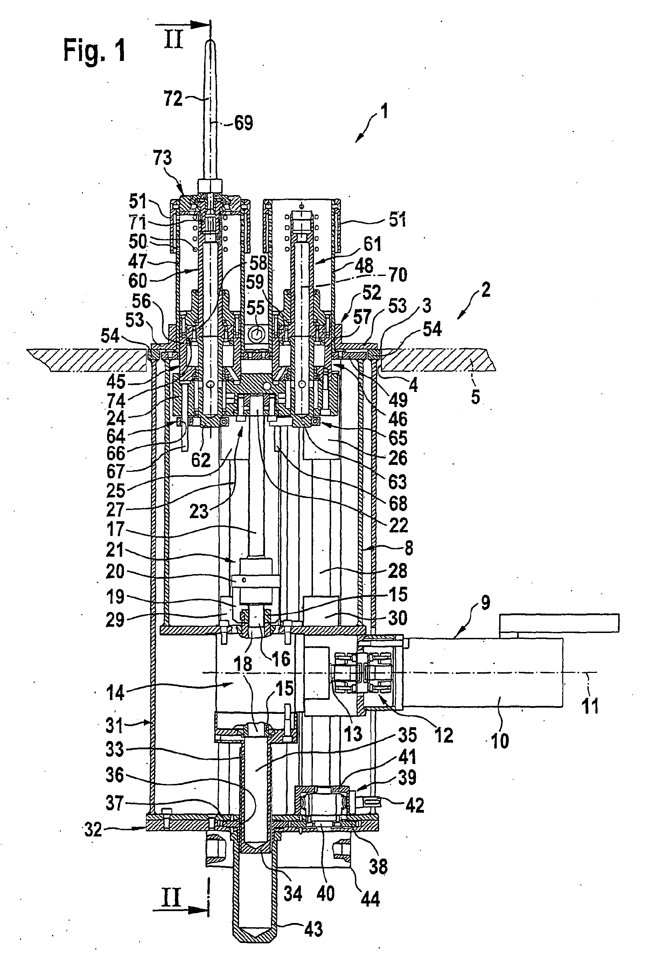

Fig. 1 zeigt einen Pressstempelmechanismus 1 einer Glasformmaschine 2, bei der es sich z.B. um eine Sektion einer I.S.-Glasformmaschine handeln kann. Die Glasformmaschine 2 arbeitet in dem dargestellten Ausführungsbeispiel im sogenannten Doppeltropfenbetrieb, bei dem jeweils zwei Glasbehälter gleichzeitig hergestellt werden.

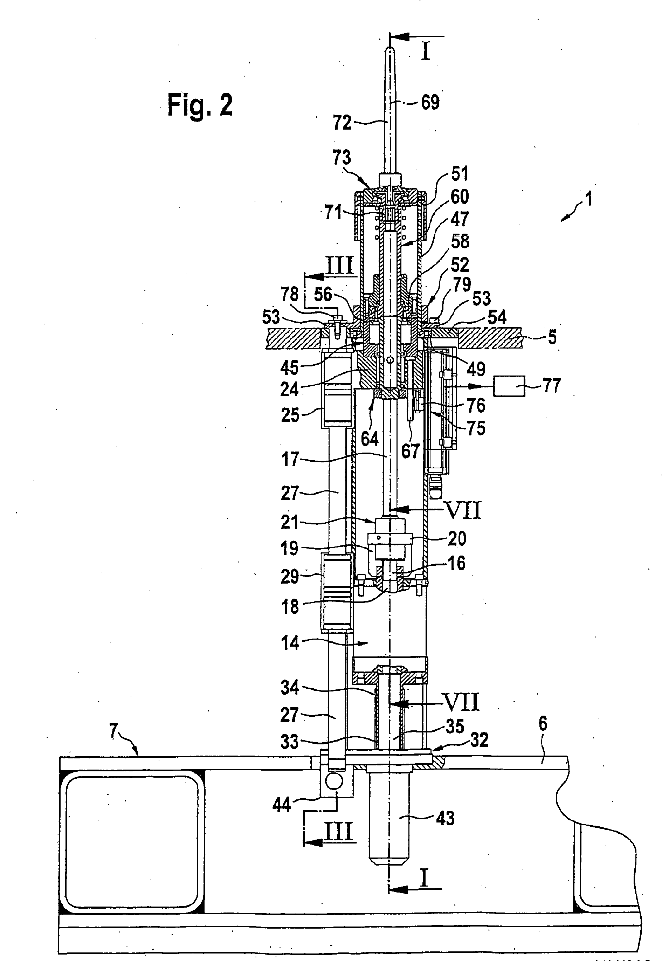

Der Pressstempelmechanismus 1 ist mit einem Dichtungsspalt 3 in eine Ausnehmung 4 einer Oberplatte 5 der Glasformmaschine 2 eingesetzt. Der Pressstempelmechanismus 1 ist gemäß Fig. 2 unten mit einer Kopfplatte 6 eines Maschinenbettes 7 verschraubt.

Der Pressstempelmechanismus 1 weist gemäß Fig. 1 ein erstes Gehäuse 8 auf, das einen ersten Antrieb 9 trägt. Der erste Antrieb 9 besitzt einen Elektroservomotor 10 mit waagerechter Längsachse 11, der über eine spielfreie elastische Kupplung 12 mit einer Eingangswelle 13 eines Winkelgetriebes 14 verbunden ist.

Eine Abtriebswelle 15 des Winkelgetriebes 14 weist einen ein freies Ende 16 einer koaxialen Gewindespindel 17 mit allseitigem radialen Spiel aufnehmenden Hohlraum 18 auf. Die Abtriebswelle 15 ist drehfest mit einem tassenförmigen Zwischenstück 19 verbunden, dessen in Fig. 1 oberes Ende mit einem Außenflansch 20 einer Mutter 21 verschraubt ist. Die durch den ersten Antrieb 9 drehend antreibbare Mutter 21 steht mit der Gewindespindel 17 im Eingriff.

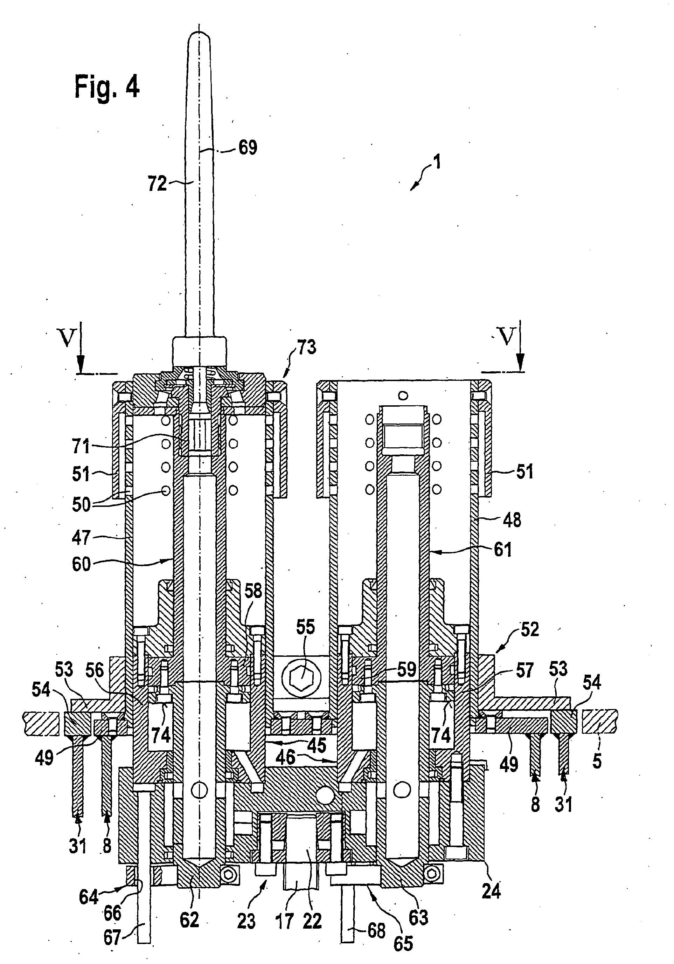

Wie Fig. 4 genauer zeigt, ist ein oberes Ende 22 der Gewindespindel 17 durch einen Spannsatz 23 drehfest mit einer Traverse 24 verbunden.

Die Traverse 24 ist mittels Führungsbuchsen 25 und 26 drehfest verschieblich auf zueinander parallelen Führungsstangen 27 und 28 geführt. Auch das erste Gehäuse 8 ist über solche Führungsbuchsen 29 und 30 auf den Führungsstangen 27, 28 drehfest und verschieblich geführt.

Das erste Gehäuse 8 ist im Abstand von einem zweiten Gehäuse 31 umgeben, dessen Boden 32 gemäß Fig. 2 an der Kopfplatte 6 befestigt ist. Das zweite Gehäuse 31 erstreckt sich nach oben hin bis in die Ausnehmung 4.

Das erste Gehäuse 8 weist unten einen mit einem Außengewinde 33 versehenen Fortsatz 34 auf. Der Fortsatz 34 ist mit einer mit dem Hohlraum 18 fluchtenden Ausnehmung 35 versehen, in die das freie Ende 16 der Gewindespindel 17 eintauchen kann. Der Fortsatz 34 erstreckt sich durch den Boden 32 hindurch und steht mit seinem Außengewinde 33 im Eingriff mit einem Innengewinde 36 eines Zahnrings 37. Der Zahnring 37 ist axial festgelegt, aber drehbar in dem Boden 32 gehalten. Der Zahnring 37 kämmt mit einem Zahnrad 38, das an einer Abtriebswelle 40 eines zweiten Antriebs 39 befestigt ist. Der zweite Antrieb 39 weist ein Schneckengetriebe 41 auf, dessen Eingangswelle 42 über ein nicht gezeichnetes, an sich bekanntes Verbindungsgestänge von Hand hin und her drehbar ist. Eine solche Drehung hat zur Folge, dass das erste Gehäuse 8 gegenüber dem zweiten Gehäuse 31 eine Höhengrundeinstellung erfährt, die von der Art des jeweils durch die Glasformmaschine 2 herzustellenden Glasbehälters bestimmt ist.

Der Fortsatz 34 taucht in eine Schutzkappe 43 ein, die an der Unterseite des Bodens 32 befestigt ist. Seitlich neben der Schutzkappe 43 ist an der Unterseite des Bodens 32 auch ein Anschlussblock 44 für die Zufuhr von Kühlluft und eines Druckfluids befestigt, wie später erläutert werden wird.

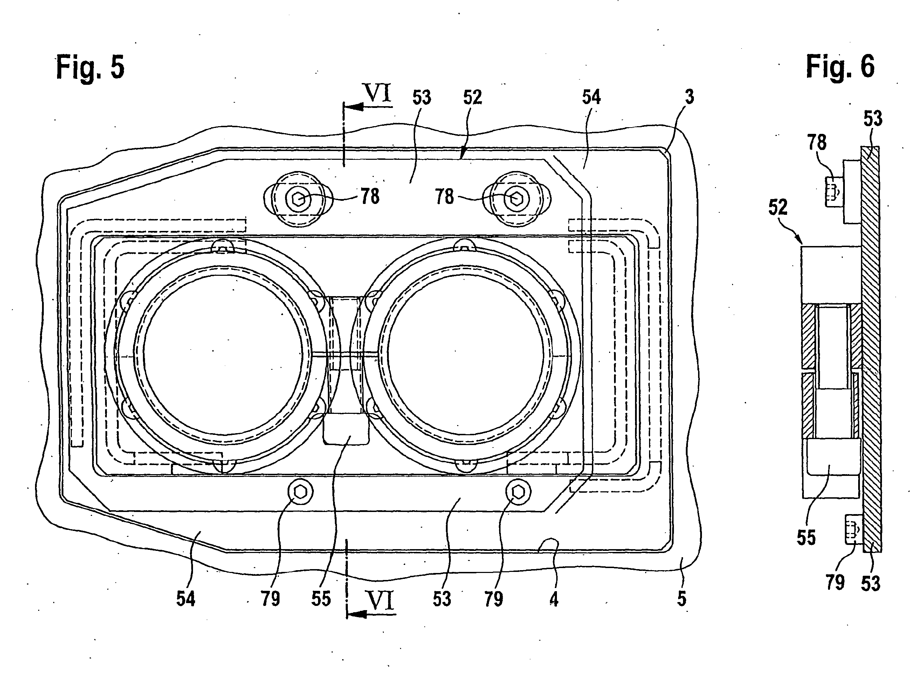

Von der Traverse 24 erstrecken sich Pressstempelhalter 45 und 46 nach oben jeweils in einen Stützzylinder 47 und 48. Jeder Stützzylinder 47, 48 ist unten mit einer Kopfplatte 49 des ersten Gehäuses 8 verschraubt und oben mit Auslassbohrungen 50 für verbrauchte Kühlluft versehen. Eine den oberen Abschnitt mit den Auslassbohrungen 50 überdeckende Abdeckschürze 51 dient einerseits als Schalldämpfer für die ausgeblasene Abluft und verhindert andererseits Verschmutzungen. Die Stützzylinder 47, 48 sind von einer brillenartigen Klemmvorrichtung 52 umgeben, die, wie im Einzelnen den Fig. 5 und 6 zu entnehmen ist, über einen waagerechten Flansch 53 mit einer Kopfplatte 54 des zweiten Gehäuses 31 verschraubt ist. Wenn eine mittige Klemmschraube 55 der Klemmvorrichtung 52 gelöst ist, lassen sich die Stützzylinder 47, 48 samt Inhalt, das erste Gehäuse 8 und der erste Antrieb 9 durch den zweiten Antrieb 39 in der Höhe verstellen, bis die für den jeweiligen Glasbehälter erforderliche Höhengrundeinstellung erreicht ist. Sodann wird die Klemmschraube 55 wieder festgezogen und damit die Höhengrundeinstellung fixiert. Das zweite Gehäuse 31 ist gemäß Fig. 2 an der Kopfplatte 6 maschinenfest abgestützt und ändert seine Höhenlage nicht.

Jeder Pressstempelhalter 45, 46 weist einen Zylinder 56 und 57 auf, in dem ein Kolben 58 und 59 abgedichtet verschiebbar ist. Von dem Kolben 58, 59 erstreckt sich eine Kolbenstange 60 und 61 zu beiden Seiten aus dem Zylinder 56, 57 heraus. Ein unteres Ende 62 und 63 der Kolbenstangen 60, 61 befindet sich stets unterhalb der Traverse 24 und trägt dort eine sich waagerecht erstreckende Lünette 64 und 65. Jede Lünette 64, 65 umgreift mit einer achsparallelen Durchbrechung 66 einen achsparallelen Stift 67 und 68 des Pressstempelhalters 45, 46. Auf diese Weise können sich die Kolbenstangen 60, 61 nicht um ihre Längsachse 69, 70 drehen.

Jede Kolbenstange trägt oben eine Pressstempelaufnahme 71, mit der ein zu der Kolbenstange 60, 61 koaxialer Pressstempel 72 durch einen längsgeteilten Splitring 73 kuppelbar ist. Wie Fig. 1 zeigt, ist der geschlossene Splitring 73 durch den zugehörigen Stützzylinder 47, 48 in radialer Richtung gestützt. Dies gilt für alle axialen Betriebs- und Ruhestellungen des Pressstempels 72, wobei in Fig. 1 die oberste Betriebsendstellung des Pressstempels 72 gezeichnet ist. Diese oberste Betriebsendstellung erreicht der Pressstempel 72 im Betrieb selten oder nie. Dazu ist eine von dem Pressstempel 72 abgewandte Kolbenfläche 74 ständig mit einem Druckfluid, vorzugsweise Druckluft von 0,8 bis 2,5 bar, beaufschlagt.

In jedem Arbeitszylklus sorgt der erste Antrieb 9 dafür, dass die Traverse 24 und mit ihr die Pressstempelhalter 45, 46 stets eine untere Ruhestellung, eine mittlere Ladestellung und eine obere Pressstellung einnehmen. Wenn sich jetzt in der geschlossenen Vorform (nicht gezeichnet) ein Glastropfen zu großer Masse befindet, kann der Pressstempel 72 seine in Fig. 1 gezeichnete oberste Betriebsendstellung nicht erreichen. Dann verschiebt sich der Kolben, z.B. 58, mit seiner Kolbenstange 60 gegen den Druck des Druckfluids relativ zu dem Zylinder 56. Auf diese Weise erhält man eine wirksame Presskraftbegrenzung. Wenn andererseits ein Glastropfen von zu geringer Masse in die Vorform gelangt ist, fährt der Pressstempel 72 bis in seine in Fig. 1 gezeigte oberste Betriebsendstellung.

Wenn der Pressstempel 72 gewechselt werden soll, kann der Pressstempelhalter 45, 46 durch den ersten Antrieb 9 über die in Fig. 1 gezeigte oberste Betriebsendstellung hinaus nach oben gefahren werden, bis der Splitring 73 oben aus seinem Stützzylinder 47, 48 herausragt. In dieser axialen Montagestellung kann der Splitring 73 geöffnet und der Pressstempel 72 gewechselt werden. Anschließend wird der Splitring 73 wieder geschlossen und in seinen Stützzylinder 47, 48 hinabgefahren.

Diese beiden Zustände zu großer oder zu geringer Glasmasse des Glastropfens werden gemäß Fig. 2 durch Weggeber 75 festgestellt. Die Weggeber 75 sind an dem ersten Gehäuse 8 parallel zu der zugehörigen Kolbenstange 60, 61 befestigt. An die jeweilige Lünette 64, 65 ist ein Betätigungselement 76 für den Weggeber 75 angeschraubt. Auf diese Weise können durch den Weggeber 75 der axialen Stellung des zugehörigen Pressstempels 72 entsprechende elektrische Signale in eine Auswerteschaltung 77 eingegeben werden. So lässt sich in an sich bekannter Weise die Masse der Glastropfen über die Auswerteschaltung 77 regeln.

Fig. 2 zeigt auch, dass der Flansch 53 der Klemmvorrichtung 52 einerseits jeweils mit einer Schraube 78 am oberen Ende der Führungsstangen 27, 28 und andererseits mit Schrauben 79 an der Kopfplatte 54 befestigt ist.

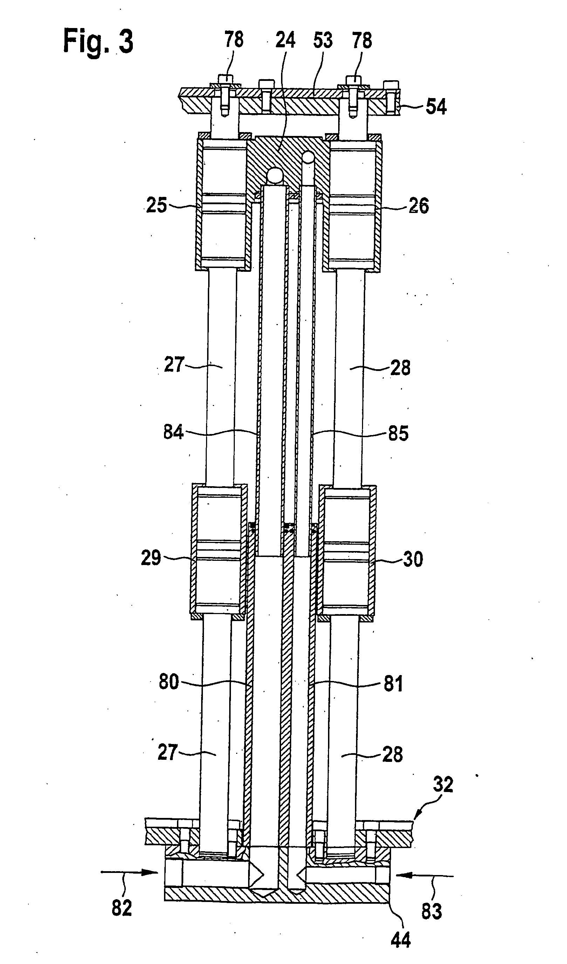

Gemäß Fig. 3 sind einstückig miteinander ausgebildete Versorgungsrohre 80 und 81 parallel zu der Längsachse 69 (Fig. 1) an dem Boden 32 des zweiten Gehäuses 31 befestigt. Dem Versorgungsrohr 80 wird durch den Anschlussblock 44 in Richtung eines Pfeils 82 Kühlluft für die Pressstempel 72 zugeführt.

Entsprechend wird dem Versorgungsrohr 81 durch den Anschlussblock 44 in Richtung eines Pfeils 83 ein Druckfluid, insbesondere Druckluft, zur Beaufschlagung der Kolbenfläche 74 (Fig. 1) zugeführt. In jedes Versorgungsrohr 80, 81 taucht ein an der Traverse 24 befestigtes Teleskoprohr 84 und 85 abgedichtet ein. Das obere Ende des Teleskoprohrs 84 mündet in ein Kanalsystem, das sich von der Traverse 24 durch die hohle Kolbenstange 60, 61 bis in den Pressstempel 72 erstreckt. Das obere Ende des Teleskoprohrs 85 mündet in ein weiteres Kanalsystem, das durch die Traverse 24 in den Zylinder 56, 57 führt.

Fig. 4 zeigt den oberen Bereich der Fig. 1 zur Verdeutlichung in vergrößerter Darstellung.

Die Fig. 5 und 6 zeigen Einzelheiten der Ausgestaltung der Kopfplatte 54 sowie der Klemmvorrichtung 52.

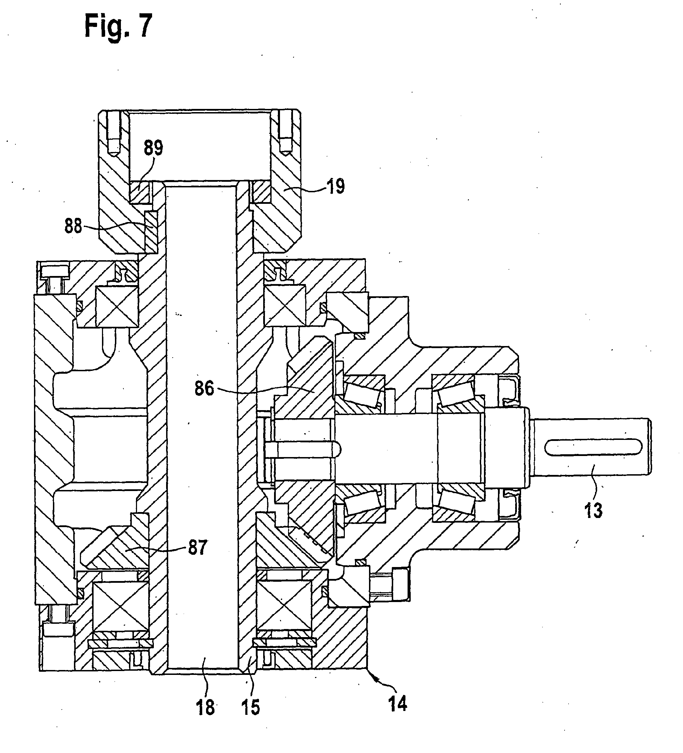

Fig. 7 verdeutlicht Einzelheiten des Winkelgetriebes 14. Die Eingangswelle 13 treibt ein erstes Kegelrad 86, das mit einem zweiten Kegelrad 87 auf der Abtriebswelle 15 kämmt. Das Zwischenstück 19 ist mit dem oberen Ende der Abtriebswelle 15 über eine Passfeder 88 drehfest verbunden und durch eine Mutter 89 axial an der Abtriebswelle 15 festgelegt.

## Patentansprüche

1. Pressstempelmechanismus (1) einer Glasformmaschine (2),
mit wenigstens einem, zusammen mit einer Pressstempelaufnahme (71) im normalen Betrieb axial hin und her bewegbaren Pressstempel (72),
mit einem ersten, einen ersten Antrieb (9) tragenden, verschiebbar angeordneten Gehäuse (8),
mit einem zweiten, maschinenfesten, einen zweiten Antrieb (39) tragenden Gehäuse (31),
wobei an jeder Pressstempelaufnahme (71) eine Kolbenstange (60;61) eines Kolbens (58;59) befestigt ist,
wobei jeder Kolben (58;59) in einem Zylinder (56;57) eines Pressstempelhalters (45;46) verschiebbar ist,
wobei eine von dem Pressstempel (72) angewandte Kolbenfläche (74) mit einem Druckfluid (83) beaufschlagt ist,
wobei der Pressstempelhalter (45;46) durch den ersten Antrieb (9) axial zwischen einer Ruhe- und einer Pressstellung hin und her bewegbar ist
und wobei das erste Gehäuse (8) durch den zweiten Antrieb (39) gegenüber dem zweiten Gehäuse (31) parallel zu einer Längsachse (69) des wenigstens einen Pressstempels (72) einstellbar ist,
**dadurch gekennzeichnet,**
**dass** der Pressstempelhalter (45;46) drehfest mit einer Gewindespindel (17) verbunden ist,
**dass** mit der Gewindespindel (17) eine durch den ersten Antrieb (9) drehend antreibbare Mutter (21) im Eingriff steht,
**dass** die Mutter (21) mit einer Abtriebswelle (15) eines Winkelgetriebes (14) gekuppelt ist und
**dass** eine Eingangswelle (13) des Winkelgetriebes (14) durch einen Elektroservomotor (10) des ersten Antriebs (9) drehend antreibbar ist.

2. Pressstempelmechanismus nach Anspruch 1,
**dadurch gekennzeichnet,**
**dass** zwischen dem Elektroservomotor (10) und der Eingangswelle des Winkelgetriebes (14) eine spielfreie elastische Kupplung (12) angeordnet ist.

3. Pressstempelmechanismus nach Anspruch 1 oder 2,
**dadurch gekennzeichnet,**
**dass** die Abtriebswelle (15) des Winkelgetriebes (14) koaxial mit der Gewindespindel (17) angeordnet ist und
**dass** die Abtriebswelle (15) einen ein freies Ende (16) der Gewindespindel (17) mit allseitigem radialen Spiel aufnehmenden, konzentrischen Hohlraum (18) aufweist.

4. Pressstempelmechanismus nach einem der Ansprüche 1 bis 3,
**dadurch gekennzeichnet,**
**dass** dann, wenn der Pressstempelmechanismus (1) mehrere Pressstempel (72) aufweist, alle Pressstempelhalter (45,46) an einer gemeinsamen Traverse (24) befestigt sind, und
**dass** die Traverse (24) drehfest mit der Gewindespindel (17) verbunden ist.

5. Pressstempelmechanismus nach einem der Ansprüche 1 bis 4,
**dadurch gekennzeichnet,**
**dass** jeder Pressstempel (72) und seine Pressstempelaufnahme (71) durch einen längsgeteilten Splitring (73) miteinander kuppelbar sind,
**dass** der geschlossene Splitring (73) durch einen Stützzylinder (47;48) in radialer Richtung gestützt ist,
**dass** jeder Stützzylinder (47;48) an dem ersten Gehäuse (8) befestigt ist und
**dass** an dem ersten Gehäuse (8) auch das Winkelgetriebe (14) und der Elektroservomotor (14) des ersten Antriebs (9) befestigt sind.

6. Pressstempelmechanismus nach Anspruch 5,
**dadurch gekennzeichnet,**
**dass** an dem ersten Gehäuse (8) auch ein Weggeber (75) parallel zu der Kolbenstange (60;61) befestigt ist,
**dass** an der Kolbenstange (60;61) ein Betätigungselement (76) für den Weggeber (75) befestigt ist, und
**dass** durch den Weggeber (75) der axialen Stellung des zugehörigen Pressstempels (72) entsprechende elektrische Signale in eine Auswerteschaltung (77) eingebbar sind.

7. Pressstempelmechanismus nach einem der Ansprüche 1 bis 6,
**dadurch gekennzeichnet,**
**dass** an jeder Kolbenstange (60:61) eine sich radial erstreckende Lünette (64;65) befestigt ist, und
**dass** die Lünette (64;65) mit einer achsparallelen Durchbrechung (66) einen achsparallelen Stift (67) des Pressstempelhalters (45;46) umgreift.

8. Pressstempelmechanismus nach Anspruch 7,
**dadurch gekennzeichnet,**
**dass** an der Lünette (64;65) das Betätigungselement (76) für den Weggeber (75) befestigt ist.

9. Pressstempelmechanismus nach einem der Ansprüche 1 bis 8,
**dadurch gekennzeichnet,**
**dass** das erste Gehäuse (8) an seinem von dem wenigstens einen Pressstempel /72) angewandten Ende einen mit einem Außengewinde (33) versehenen Fortsatz (34) aufweist,
**dass** mit dem Außengewinde (33) ein Innengewinde (36) eines axial festgelegten Zahnrings (37) des zweiten Antriebs (39) in Eingriff steht und
**dass** mit dem Zahnring (37) ein Zahnrad (38) des zweiten Antriebs (39) kämmt.

10. Pressstempelmechanismus nach Anspruch 9,
**dadurch gekennzeichnet,**
**dass** das Zahnrad (38) durch ein Schneckengetriebe (41) hin und her drehend antreibbar ist.

11. Pressstempelmechanismus nach einem der Ansprüche 5 bis 10,
**dadurch gekennzeichnet,**
**dass** sich das zweite Gehäuse (31) bis zu dem wenigstens einen Stützzylinder (47;48) erstreckt und
**dass** jede durch den zweiten Antrieb (39) eingestellte axiale Stellung des ersten Gehäuses (8) durch eine an dem zweiten Gehäuse (31) befestigte, mit dem wenigstens einen Stützzylinder (47;48) zusammenwirkende Klemmvorrichtung (52) fixierbar ist.

12. Pressstempelmechanismus nach Anspruch 11,
**dadurch gekennzeichnet,**
**dass** das erste Gehäuse (8) innerhalb des zweiten Gehäuses (31) angeordnet ist.

13. Pressstempelmechanismus nach einem der Ansprüche 11 oder 12,
**dadurch gekennzeichnet,**
**dass** parallel zu der Längsachse (69) des wenigstens einen Pressstempels (72) zwei im seitlichen Abstand voneinander angeordnete Führungsstangen (27,28) an dem zweiten Gehäuse (31) befestigt sind,
**dass** die Traverse (24) mittels Führungsbuchsen (25,26) auf den Führungsstangen (27,28) verschiebbar sind und
**dass** das erste Gehäuse (8) mittels Führungsbuchsen (29,30) auf den Führungsstangen (27,28) verschiebbar ist.

14. Pressstempelmechanismus nach einem der Ansprüche 11 bis 13,
**dadurch gekennzeichnet,**
**dass** parallel zu der Längsachse (69) des wenigstens einen Pressstempels (72) wenigstens ein Versorgungsrohr (80;81) für Pressstempelkühlluft (82) und für das Druckfluid (83) an einem von dem wenigstens einen Pressstempel (72) abgewandten Bereich des zweiten Gehäuses (31) befestigt ist und
**dass** in jedes Versorgungsrohr (80:81) ein an der Traverse (24) befestigtes Teleskoprohr (84;85) abgedichtet eintaucht.

15. Pressstempelmechanismus nach Anspruch 14,
**dadurch gekennzeichnet,**
**dass** das wenigstens eine Versorgungsrohr (80;81) und das wenigstens eine Teleskoprohr (84;85) zwischen den Führungsstangen (27,28) angeordnet sind.

## Claims

1. Pressing plunger mechanism (1) of a glassware forming machine (2)
having at least one pressing plunger (72) which can move axially in a reciprocating manner together with a pressing plunger receiver (71) during normal operation,
having a first housing (8) which supports a first drive (9) and is disposed in a displaceable manner,
having a second housing (31) which is fixed to the machine and supports a second drive (39),
wherein a piston rod (60; 61) of a piston (58; 59) is attached to each pressing plunger receiver (71),
wherein each piston (58; 59) is displaceable in a cylinder (56; 57) of a pressing plunger holder (45; 46),
wherein a piston surface (74) facing away from the pressing plunger (72) is subjected to a pressurised fluid (83),
wherein the pressing plunger holder (45; 46) can be moved in a reciprocating manner by the first drive (9) in the axial direction between an inoperative position and a pressing position
and wherein the first housing (8) can be adjusted by the second drive (39) with respect to the second housing (31) in parallel with a longitudinal axis (69) of the at least one pressing plunger (72),
**characterised in that**
the pressing plunger holder (45; 46) is non-rotatably connected to a threaded spindle (17),
a nut (21) which can be rotatably driven by the first drive (9) is in engagement with the threaded spindle (17),
the nut (21) is coupled to a driven shaft (15) of an angular gear (14) and
an input shaft (13) of the angular gear (14) can be rotatably driven by an electric servo motor (10) of the first drive (9).

2. Pressing plunger mechanism as claimed in claim 1,
**characterised in that**
a clearance-free elastic coupling (12) is disposed between the electric servo motor (10) and the input shaft of the angular gear (14).

3. Pressing plunger mechanism as claimed in claim 1 or 2,
**characterised in that**
the driven shaft (15) of the angular gear (14) is disposed coaxially with the threaded spindle (17) and
the driven shaft (15) has a concentric hollow space (18) receiving a free end (16) of the threaded spindle (17) with radial clearance on all sides.

4. Pressing plunger mechanism as claimed in any one of claims 1 to 3,
**characterised in that**
when the pressing plunger mechanism (1) has a plurality of pressing plungers (72), all pressing plunger holders (45; 46) are attached to a common cross-piece (24), and
the cross-piece (24) is non-rotatably connected to the threaded spindle (17).

5. Pressing plunger mechanism as claimed in any one of claims 1 to 4,
**characterised in that**
each pressing plunger (72) and its pressing plunger receiver (71) can be coupled to each other by a longitudinally divided split ring (73),
the closed split ring (73) is supported by a support cylinder (47; 48) in the radial direction,
each support cylinder (47; 48) is attached to the first housing (8) and
the angular gear (14) and the electric servo motor (14) of the first drive (9) are also attached to the first housing (8).

6. Pressing plunger mechanism as claimed in claim 5,
**characterised in that**
a position sensor (75) is also attached to the first housing (8) in parallel with the piston rod (60;61),
an actuating element (76) for the position sensor (75) is attached to the piston rod (60; 61), and
by means of the position sensor (75), electrical signals corresponding to the axial position of the associated pressing plunger (72) can be input into an evaluation circuit (77).

7. Pressing plunger mechanism as claimed in any one of claims 1 to 6,
**characterised in that**
a radially extending collar (64; 65) is attached to each piston rod (60; 61), and
by means of an axially parallel aperture (66), the collar (64; 65) engages around an axially parallel pin (67) of the pressing plunger holder (45; 46).

8. Pressing plunger mechanism as claimed in claim 7,
**characterised in that**
the actuating element (76) for the position sensor (75) is attached to the collar (64; 65).

9. Pressing plunger mechanism as claimed in any one of claims 1 to 8,
**characterised in that**
on its end facing away from the at least one pressing plunger (72), the first housing (8) has a projection (34) provided with an outer thread (33),
an inner thread (36) of an axially fixed pinion (37) of the second drive (39) is in engagement with the outer thread (33) and
a pinion (38) of the second drive (39) meshes with the pinion (37).

10. Pressing plunger mechanism as claimed in claim 9,
**characterised in that**
the pinion (38) can be rotatably driven in a reciprocating manner by a worm gear (41).

11. Pressing plunger mechanism as claimed in any one of claims 5 to 10,
**characterised in that**
the second housing (31) extends up to the at least one support cylinder (47; 48) and
each axial position of the first housing (8) set by the second drive (39) can be fixed by a clamping device (52) which is attached to the second housing (31) and cooperates with the at least one support cylinder (47; 48).

12. Pressing plunger mechanism as claimed in claim 11,
**characterised in that**
the first housing (8) is disposed within the second housing (31).

13. Pressing plunger mechanism as claimed in any one of claims 11 or 12,
**characterised in that**
in parallel with the longitudinal axis (69) of the at least one pressing plunger (72) two guide rods (27; 28) which are disposed laterally spaced apart from each other are attached to the second housing (31),
the cross-pieces (24) can be displaced by means of guide bushings (25, 26) on the guide rods (27, 28) and
the first housing (8) can be displaced by means of guide bushings (29; 30) on the guide rods (27; 28).

14. Pressing plunger mechanism as claimed in any one of claims 11 to 13,
**characterised in that**
in parallel with the longitudinal axis (69) of the at least one pressing plunger (72) at least one supply pipe (80; 81) for pressing plunger cooling air (82) and for the pressurised fluid (83) is attached to a region of the second housing (31) facing away from the at least one pressing plunger (72) and
a telescopic pipe (84; 85) attached to the cross-piece (24) is positioned being inserted in a sealed manner within each supply pipe (80; 81).

15. Pressing plunger mechanism as claimed in claim 14,
**characterised in that**
the at least one supply pipe (80; 81) and the at least one telescopic pipe (84; 85) are disposed between the guide rods (27; 28).

## Revendications

1. Mécanisme pour poinçon (1) d'une machine de moulage du verre (2),
comportant au moins un poinçon (72), mobile en va-et-vient dans le sens axial conjointement avec un logement de poinçon (71) en cours de service normal,
comportant un premier carter (8), disposé de manière mobile et portant un premier système d'entraînement (9),
comportant un deuxième carter (31), solidaire de la machine et portant un deuxième système d'entraînement (39),
une tige de piston (60 ; 61) d'un piston (58 ; 59) étant fixée sur chaque logement de poinçon (71),
chaque piston (58, 59) étant mobile dans un cylindre (56 ; 57) d'un porte-poinçon (45 ; 46),
une surface (74) du piston, opposée au poinçon (72), étant sollicitée par un fluide sous pression (83),
le porte-poinçon (45 ; 46) étant mobile en va-et-vient par le premier système d'entraînement (9) dans le sens axial entre une position de repos et une position de compression,
et le premier carter (8) pouvant être réglé par le deuxième système d'entraînement (39) par rapport au deuxième carter (31) parallèlement à un axe longitudinal (69) dudit au moins un poinçon (72),
**caractérisé**
**en ce que** le porte-poinçon (45 ; 46) est relié de manière solidaire en rotation avec une broche filetée (17),
**en ce qu'**un écrou (21), pouvant être entraîné en rotation par le premier système d'entraînement (9), engrène avec la broche filetée (17),
**en ce que** l'écrou (21) est couplé à un arbre de sortie (15) d'un engrenage conique (14), et
**en ce qu'**un arbre d'entrée (13) de l'engrenage conique (14) peut être entraîné en rotation par un servomoteur (10) électrique du premier système d'entraînement (9).

2. Mécanisme pour poinçon selon la revendication 1, **caractérisé**
**en ce qu'**un couplage (12) élastique sans jeu est disposé entre le servomoteur (10) électrique et l'arbre d'entrée de l'engrenage conique (14).

3. Mécanisme pour poinçon selon la revendication 1 ou 2, **caractérisé**
**en ce que** l'arbre de sortie (15) de l'engrenage conique (14) est disposé coaxialement à la broche filetée (17), et
**en ce que** l'arbre de sortie (15) comporte une cavité (18) concentrique, recevant une extrémité (16) libre de la broche filetée (17) avec un jeu radial de toutes parts.

4. Mécanisme pour poinçon selon l'une quelconque des revendications 1 à 3, **caractérisé**
**en ce que,** lorsque le mécanisme pour poinçon (1) comporte plusieurs poinçons (72), tous les porte-poinçon (45 ; 46) sont fixés à une traverse (24) commune, et
**en ce que** la traverse (24) est reliée de manière solidaire en rotation à la broche filetée (17).

5. Mécanisme pour poinçon selon l'une quelconque des revendications 1 à 4, **caractérisé**
**en ce que** chaque poinçon (72) et son logement de poinçon (71) peuvent être couplés entre eux par un circlips (73) scindé dans le sens longitudinal,
**en ce que** le circlips (73) fermé est supporté dans la direction radiale par un cylindre de soutènement (47 ; 48),
**en ce que** chaque cylindre de soutènement (47 ; 48) est fixé sur le premier carter (8), et
**en ce que** sur le premier carter (8) sont également fixés l'engrenage conique (14) et le servomoteur (14) électrique du premier système d'entraînement (9).

6. Mécanisme pour poinçon selon la revendication 5, **caractérisé**
**en ce qu'**un capteur de position (75) est également fixé sur le premier carter (8), parallèlement à la tige de piston (60 ; 61),
**en ce qu'**un élément d'actionnement (76) pour le capteur de position (75) est fixé sur la tige de piston (60 ; 61), et
**en ce que** des signaux électriques correspondant à la position axiale du poinçon (72) concerné peuvent être entrés par le capteur de position (75) dans un composant d'analyse (77).

7. Mécanisme pour poinçon selon l'une quelconque des revendications 1 à 6, **caractérisé**
**en ce qu'**une lunette (64 ; 65), orientée dans le sens radial, est fixée sur chaque tige de piston (60 ; 61), et
**en ce que** ladite lunette (64 ; 65) enserre, avec un passage (66) parallèle à l'axe, un tenon (67), parallèle à l'axe, du porte-poinçon (45 ; 46).

8. Mécanisme pour poinçon selon la revendication 7, **caractérisé**
**en ce que** l'élément d'actionnement (76) pour le capteur de position (75) est fixé sur la lunette (64 ; 65).

9. Mécanisme pour poinçon selon l'une quelconque des revendications 1 à 8, **caractérisé**
**en ce que** le premier carter (8), sur son extrémité opposée audit au moins un poinçon (72), comporte un prolongement (34) muni d'un filetage extérieur (33),
**en ce qu'**un filetage intérieur (36) d'une bague dentée (37), fixée axialement, du deuxième système d'entraînement (39) engrène avec le filetage extérieur (33), et
**en ce qu'**une roue dentée (38) du deuxième système d'entraînement (39) engrène avec la bague dentée (37).

10. Mécanisme pour poinçon selon la revendication 9, **caractérisé**
**en ce que** la roue dentée (38) peut être entraînée en rotation en va-et-vient par un engrenage à vis sans fin (41).

11. Mécanisme pour poinçon selon l'une quelconque des revendications 5 à 10, **caractérisé**
**en ce que** le deuxième carter (31) s'étend jusqu'audit au moins un cylindre de soutènement (47 ; 48), et
**en ce que** chaque position axiale du premier carter (8), réglée par le deuxième système d'entraînement (39), peut être immobilisée par un dispositif de serrage (52), fixé sur le deuxième carter (31) et coopérant avec ledit au moins un cylindre de soutènement (47 ; 48).

12. Mécanisme pour poinçon selon la revendication 11, **caractérisé**
**en ce que** le premier carter (8) est disposé à l'intérieur du deuxième carter (31).

13. Mécanisme pour poinçon selon la revendication 11 ou 12, **caractérisé**
**en ce que**, parallèlement à l'axe longitudinal (69) dudit au moins un poinçon (72), deux barres de guidage (27, 28), disposées à distance latérale l'une de l'autre, sont fixées sur le deuxième carter (31),
**en ce que** la traverse (24) est apte à se déplacer sur les barres de guidage (27, 28) au moyen de douilles de guidage (25, 26), et
**en ce que** le premier carter (8) est apte à se déplacer sur les barres de guidage (27, 28) au moyen de douilles de guidage (29, 30).

14. Mécanisme pour poinçon selon l'une quelconque des revendications 11 à 13, **caractérisé**
**en ce que**, parallèlement à l'axe longitudinal (69) dudit au moins un poinçon (72), au moins un tube d'alimentation (80 ; 81) pour l'air de refroidissement (82) du poinçon et pour le fluide sous pression (83) est fixé sur une zone du deuxième carter (31), opposée audit au moins un poinçon (72), et
**en ce qu'**un tube télescopique (84 ; 85), fixé sur la traverse (24), s'engage de manière étanche dans chaque tube d'alimentation (80 ; 81).

15. Mécanisme pour poinçon selon la revendication 14, **caractérisé**
**en ce que** ledit au moins un tube d'alimentation (80 ; 81) et ledit au moins un tube télescopique (84 ; 85) sont disposés entre les barres de guidage (27, 28).
